# EUROPÄISCHE PATENTSCHRIFT

(11) **EP 3 074 728 B1**
(45) Veröffentlichungstag und Bekanntmachung des Hinweises auf die Patenterteilung: **13.12.2017**
(21) Anmeldenummer: 14781253.1
(22) Anmeldetag: 08.10.2014
(51) Int. Cl.: G01D 11/24, B29C 45/14, B29L 31/34

(54) **VERFAHREN ZUM HERSTELLEN EINES SENSORS**
METHOD FOR MANUFACTURING A SENSOR
MÉTHODE DE FABRICATION D'UN CAPTEUR

(30) Priorität: 28.11.2013 DE 102013224464; 06.05.2014 DE 102014208425
(43) Veröffentlichungstag der Anmeldung: 05.10.2016
(73) Patentinhaber: Continental Teves AG & Co. oHG, 60488 Frankfurt (DE)
(72) Erfinder: GOLL, Manfred, 63695 Glauburg 2 (DE); SCHRADER, Ulrich, 61206 Wöllstadt (DE); SCHILLINGER, Jakob, 85080 Gaimersheim (DE); STICKSEL, Gerhard, 63571 Gelnhausen-Haitz (DE)
(86) Internationale Anmeldenummer: PCT/EP2014/071588
(87) Internationale Veröffentlichungsnummer: WO 2015/078627

(56) Entgegenhaltungen:
- EP-A1- 1 634 687
- EP-A2- 1 239 266
- DE-A1-102004 033 284
- DE-A1-102007 023 178

## Beschreibung

Die Erfindung betrifft ein Verfahren zum Herstellen eines Sensors und den durch das Verfahren hergestellten Sensor.

Aus der WO 2010 / 037 810 A1 ist ein Sensor zum Ausgeben eines elektrischen Signals bekannt, dass von einer physikalischen Größe abhängig ist, die über ein physikalisches Feld basierend auf einem Messaufnehmer erfasst wird. EP 1 634 687 A1 und EP 1 239 266 A2 beschreiben Sensoren aus dem Stand der Technik, die aus ZweiKomponenten-Spritzguss-Verfahren hergestellt werden. Es ist Aufgabe der Erfindung, den bekannten Sensor zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Herstellen eines Sensors, der eingerichtet ist, ein von einer zu messenden Größe abhängiges physikalisches Feld über einen Messaufnehmer zu erfassen und ein elektrisches Ausgangssignal basierend auf dem erfassten physikalischen Feld über ein Datenkabel auszugeben, die Schritte:
- Auflegen des Messaufnehmers und des Datenkabels auf eine die Position des Messaufnehmers und des Datenkabels definierenden Form,
- Ummanteln des in der Form positionierten Messaufnehmers und Datenkabels mit einem ersten Material,
- Entfernen des mit dem ersten Material ummantelten Messaufnehmers und Datenkabels aus der Form, und
- Ummanteln des mit dem ersten Material ummantelten und aus der Form entfernten Messaufnehmers und Datenkabels mit einem zweiten Material.

Dem angegebenen Verfahren liegt die Überlegung zugrunde, dass der Messaufnehmer und das Datenkabel zumindest von einem der beiden Materialen vollständig umhüllt sein müssen, damit beide Elemente vor Feuchtigkeit und anderen verwitternd wirkenden Einflüssen geschützt sind. Zum Umhüllen der beiden Elemente könnten diese in eine Form gelegt werden, die dann beispielsweise mit dem ersten Material ausgespritzt wird. Hier stellt sich jedoch grundsätzlich das Problem, dass immer ein Teil der Elemente am Rand der Form aufliegt, und dass so an diesen Stellen keine vollständige Abdichtung mit dem Material möglich ist, weil die Elemente an diesen Stellen nicht mit dem Material ummantelt werden können.

Zwar könnte beispielsweise unter Einsatz eines Haltemechanismus der Messaufnehmer so gehalten werden, dass alle Elemente vollständig mit dem Material ummantelt werden können. Der Messaufnehmer muss in diesem Haltemechanismus jedoch positioniert werden, was insbesondere aufgrund der Steifigkeit des Kabels nur bedingt innerhalb ausreichender Toleranzen möglich ist. Zudem erfordert das Einsetzen des Messaufnehmers in den Haltemechanismus zusätzliche Fertigungsschritte und auch der Haltemechanismus kann nicht vollständig ummantelt werden, wodurch weiterhin Spalte verbleiben, durch die die oben genannte Feuchtigkeit eindringen und den Messaufnehmer und/oder das Datenkabel erreichen kann.

Im Rahmen des angegebenen Verfahrens wird daher ein anderer Weg gegangen. Hier wird der Messaufnehmer mit dem Datenkabel in einem ersten Schritt mit dem ersten Material ummantelt. Dabei wird keine Rücksicht darauf genommen, ob der Messaufnehmer und/oder das Datenkabel teilweise freigelegt sind und Stellen aufweisen, die nicht vom ersten Material ummantelt sind. Vielmehr können der Messaufnehmer und das Datenkabel beim Umspritzen mit dem ersten Material hochpräzise positioniert werden. Erst im Anschluss, beim Umspritzen mit dem zweiten Material werden der Messaufnehmer und das Datenkabel so ummantelt, dass keine freigelegten Stellen an diesen Elementen verbleiben, die Feuchtigkeit oder anderen verwitternden Einflüssen ausgesetzt sind. Auf diese Weise kann ein Sensor mit einem hochpräzise positionierten Messaufnehmer hergestellt werden, der beständig gegen Witterungseinflüsse wie Feuchtigkeit ist.

In einer Weiterbildung des angegebenen Verfahrens umfasst die Form ein Positionierelement, in der der Messaufnehmer positioniert wird. Dieses Positionierelement kann auf jede beliebige Art bereitgestellt sein, wie beispielsweise der oben erwähnte Haltemechanismus. Durch das Positionierelement kann die hochpräzise Position des Messaufnehmers mit einfachen Mitteln realisiert werden.

In einer zusätzlichen Weiterbildung des angegebenen Verfahrens umfasst die Form ein Umformelement, an dem der Messaufnehmer vor oder beim Ummanteln mit dem ersten Matelrial umgeformt wird. Mit dem Umformelement können das Datenkabel und der Messaufnehmer beim Ummanteln des ersten Materials in die Form gebracht werden, die sie für die Endapplikation benötigen. Auf diese Weise können die Taktzeiten bei der Durchführung des angegebenen Verfahrens reduziert werden.

In einer besonderen Weiterbildung des angegebenen Verfahrens ist das Umformelement ein Biegeelement. Mit einem derartigen Biegeelement kann der Messaufnehmer in eine Position gebogen werden, in der er das oben genannte physikalische Feld besonders günstig erfassen kann.

In einer anderen Weitbildung umfasst das angegebene Verfahren den Schritt Formen eines Formschlusselements in dem ersten Material beim Ummanteln des in der Form positionierten Messaufnehmers und Datenkabels mit einem ersten Material. Dieses Formschlusselement kann dazu verwendet werden, den Messaufnehmer und das Datenkabel, die von dem ersten Material umhüllt sind, mit weiteren Elementen zu verbinden.

In einer bevorzugten Weiterbildung umfasst das angegebene Verfahren den Schritt Formen einer Dichtkontur um das Formschlusselement beim Ummanteln des in der Form positionierten Messaufnehmers und Datenkabels mit einem ersten Material. Das zuvor genannte weitere Element könnte nach dem Ummanteln mit dem zweiten Material einen Spalt zwischen dem weiteren Element und dem zweiten Material ausbilden. Hierbei besteht grundsätzlich die Gefahr, dass über diesen Spalt die oben genannte Feuchtigkeit eindringen könnte. Durch das Dichtelement kann diese Eindringgefahr reduziert, wenn nicht gar vermieden werden.

In einer besonders bevorzugten Weiterbildung umfasst das angegebene Verfahren den Schritt Einsetzen eines Halteelementes in das Formschlusselement, an dem der mit dem ersten Material ummantelte Messaufnehmer und das Datenkabel nach dem Ummanteln mit dem ersten Material gehalten werden kann. Auf diese Weise kann das erste Material vollständig vom zweiten Material umhüllt werden, ohne das freigelegte Stellen am ersten Material verbleiben, so dass eine hohe Dichtigkeit mit dem zweiten Material erreicht werden kann.

In einer anderen Weiterbildung des angegebenen Verfahren werden der mit dem ersten Material ummantelte und aus der Form entfernte Messaufnehmer und das Datenkabel mit einem zweiten Material in einem unausgehärteten Zustand des ersten Materials ummantelt. Auf diese Weise können sich das erste Material und das zweite Material beim Ummanteln mit dem zweiten Material aneinander anbinden, so das Spalte zwischen dem ersten Material und dem zweiten Material verschlossen werden.

In einer noch anderen Weiterbildung umfasst das angegebene Verfahren den Schritt Ausbilden einer in Richtung des Datenkabels betrachteten um das erste Material umlaufenden Dichtkontur, die am ersten Material auf einer dem Messaufnehmer gegenüberliegenden Seite des Datenkabels angeordnet ist. Durch dieses Dichtelement kann vermieden werden, dass an einer Anschlussstelle für das Datenkabel Feuchtigkeit in den hergestellten Sensor eindringt.

Gemäß einem weiteren Aspekt der Erfindung ist ein Sensor zum Erfassen eines von einer zu messenden Größe abhängigen physikalischen Feldes über einen Messaufnehmer und zum Ausgeben eines elektrischen Ausgangssignals basierend auf dem erfassten physikalischen Feld über ein Datenkabel durch ein angegebenes Verfahren hergestellt.

Gemäß einem weiteren Aspekt der Erfindung umfasst eine Form zur Verwendung in einem der angegebenen Verfahren ein erstes Gussformteil und ein auf das erste Gussformteil auflegbares zweites Gussformteil, wobei die beiden Gussformteile im aufeinander aufgelegten Zustand einen Gussholraum ausbilden, in dem wenigstens teilweise das Datenkabel, der Messaufnehmer und das erste Material aufnehmbar ist, und wobei am ersten Gussformteil ein Biegestempel und am zweiten Gussformteil eine Aussparung zur Aufnahme des Biegestempels ausgebildet sind, mittels denen der Messaufnehmer beim Auflegen des zweiten Gussformteils auf das erste Gussformteil umformbar ist.

Die angegebene Form kann um die oben angegebene Positionierhilfe sowie die die oben genannten Dichtformbereiche erweitert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine schematische Ansicht eines Fahrzeuges mit einer Fahrdynamikregelung,
Fig. 2 eine schematische Ansicht eines Drehzahlsensors in dem Fahrzeug der Fig. 1,
Fig. 3 eine schematische Ansicht eines Verfahrensablaufes zum Herstellen eines Teils des Drehzahlsensors der Fig. 2,
Fig. 4 eine Detaildarstellung der schematischen Ansicht der Fig. 3,
Fig. 5 eine Detaildarstellung der schematischen Ansicht der Fig. 4, und
Fig. 6 eine schematische Ansicht eines alternativen Verfahrensablaufes zum Herstellen eines Teils des Drehzahlsensors der Fig. 2 zeigen.

In den Figuren werden gleiche technische Elemente mit gleichen Bezugszeichen versehen und nur einmal beschrieben.

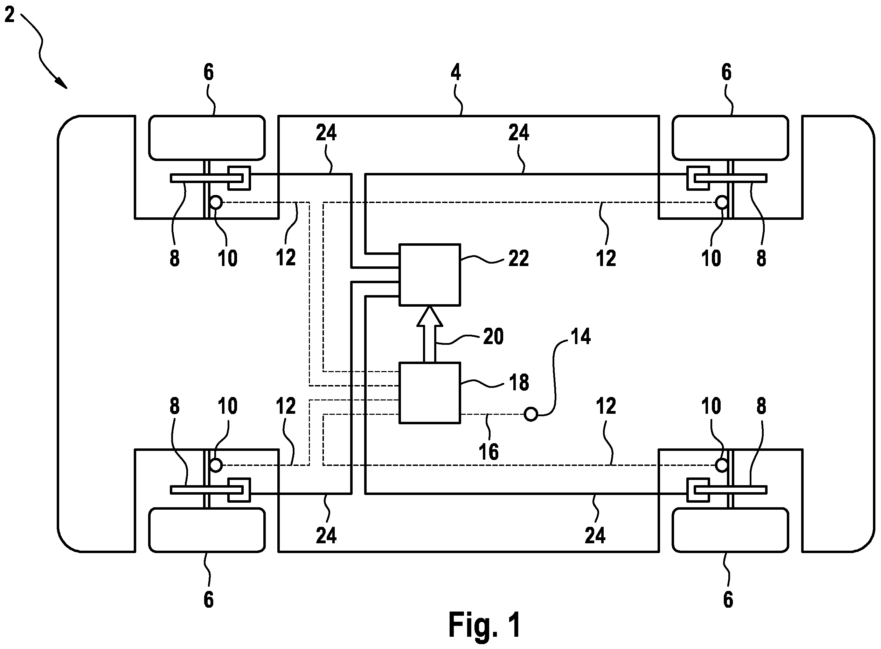

Es wird auf Fig. 1 Bezug genommen, die eine schematische Ansicht eines Fahrzeuges 2 mit einer an sich bekannten Fahrdynamikregelung zeigt. Details zu dieser Fahrdynamikregelung können beispielsweise der DE 10 2011 080 789 A1 entnommen werden.

Das Fahrzeug 2 umfasst ein Chassis 4 und vier Räder 6. Jedes Rad 6 kann über eine ortsfest am Chassis 4 befestigte Bremse 8 gegenüber dem Chassis 4 verlangsamt werden, um eine Bewegung des Fahrzeuges 2 auf einer nicht weiter dargestellten Straße zu verlangsamen.

Dabei kann es in einer dem Fachmann bekannten Weise passieren, dass das die Räder 6 des Fahrzeugs 2 ihre Bodenhaftung verlieren und sich das Fahrzeug 2 sogar von einer beispielsweise über ein nicht weiter gezeigtes Lenkrad vorgegebenen Trajektorie durch Untersteuern oder Übersteuern wegbewegt. Dies wird durch an sich bekannte Regelkreise wie ABS (Antiblockiersystem) und ESP (elektronisches Stabilitätsprogramm) vermieden.

In der vorliegenden Ausführung weist das Fahrzeug 2 dafür Drehzahlsensoren 10 an den Rädern 6 auf, die eine Drehzahl 12 der Räder 6 erfassen. Ferner weist das Fahrzeug 2 einen Inertialsensor 14 auf, der Fahrdynamidaten 16 des Fahrzeuges 2 erfasst aus denen beispielsweise eine Nickrate, eine Wankrate, eine Gierrate, eine Querbeschleunigung, eine Längsbeschleunigung und/oder eine Vertikalbeschleunigung in einer dem Fachmann an sich bekannten Weise ausgegeben werden kann.

Basierend auf den erfassten Drehzahlen 12 und Fahrdynamikdaten 16 kann ein Regler 18 in einer dem Fachmann bekannten Weise bestimmen, ob das Fahrzeug 2 auf der Fahrbahn rutscht oder sogar von der oben genannten vorgegebenen Trajektorie abweicht und entsprechen mit einem an sich bekannten Reglerausgangssignal 20 darauf reagieren. Das Reglerausgangssignal 20 kann dann von einer Stelleinrichtung 22 verwendet werden, um mittels Stellsignalen 24 Stellglieder, wie die Bremsen 8 anzusteuern, die auf das Rutschen und die Abweichung von der vorgegebenen Trajektorie in an sich bekannter Weise reagieren.

Anhand des in Fig. 1 gezeigten Drehzahlsensors 10 soll die vorliegende Erfindung näher verdeutlicht werden, auch wenn die vorliegende Erfindung an beliebigen elektronischen Vorrichtungen und insbesondere an beliebigen Sensoren, wie Magnetfeldsensoren, Beschleunigungssensoren, Drehratensensoren, Körperschallsensoren oder Temperatursensoren umsetzbar ist.

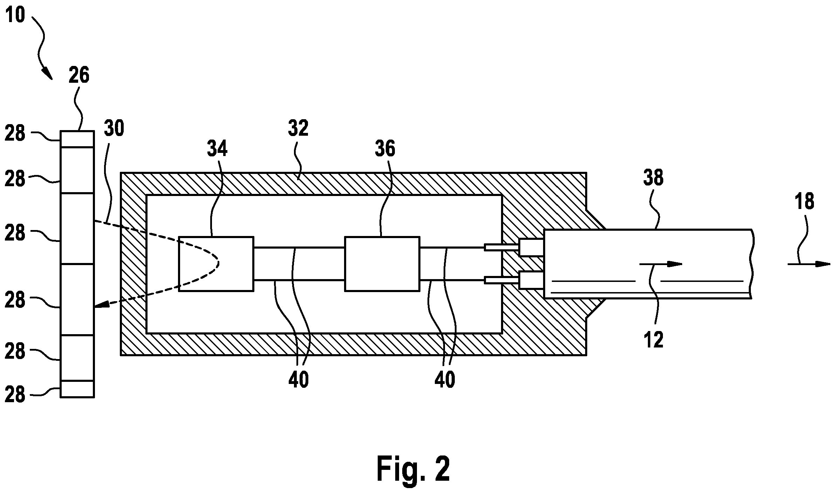

Es wird auf Fig. 2 Bezug genommen, die eine schematische Ansicht des Drehzahlsensors 10 in dem Fahrzeug 2 der Fig. 1 zeigt.

Der Drehzahlsensor 10 ist in der vorliegenden Ausführung als aktiver Drehzahlsensor 10 ausgeführt, im Rahmen dessen ein von einer drehfest mit einem der Räder 6 verbundenen Encoderscheibe 26, die aus einer Vielzahl von Magnetpolen 28 zusammengesetzt ist, ein Magnetfeld 30 abgegeben wird. Das Magnetfeld 30 durchdringt einen in einem Gehäuse 32 eingehausten Messaufnehmer 34, der über eine Signalaufbereitsschaltung 36 an ein Datenkabel 38 angeschlossen ist, über das die Drehzahl 12 an den Regler 18 übertragen werden kann. Dabei können der Messaufnehmer 34, die Signalaufbereitungsschaltung 36 und das Datenkabel 38 über Verdrahtungen 40, beispielsweise in Form eines Leadframes miteinander verdrahtet sein.

Weitere Hintergrundinformationen zu aktiven Drehzahlsensoren können beispielsweise der DE 101 46 949 A1 entnommen werden.

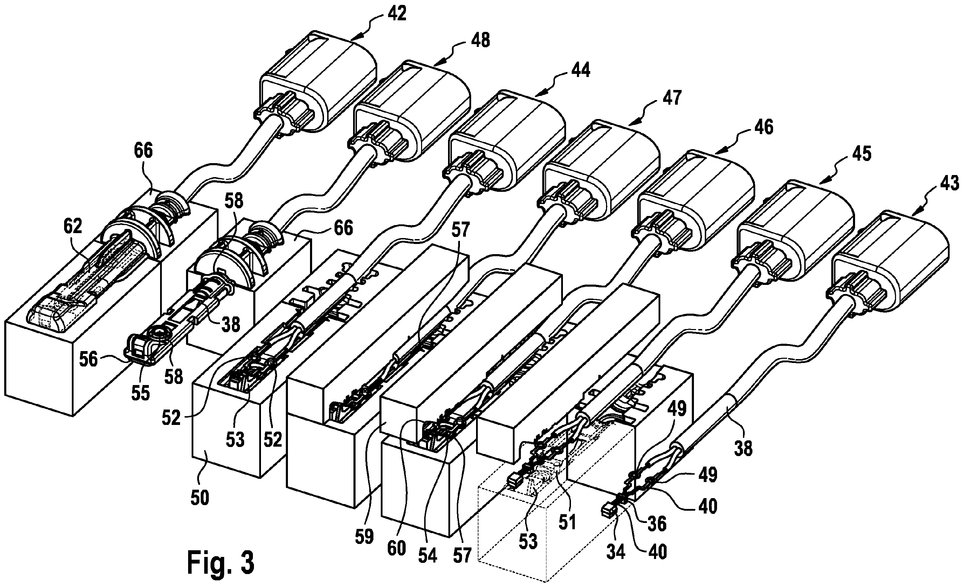

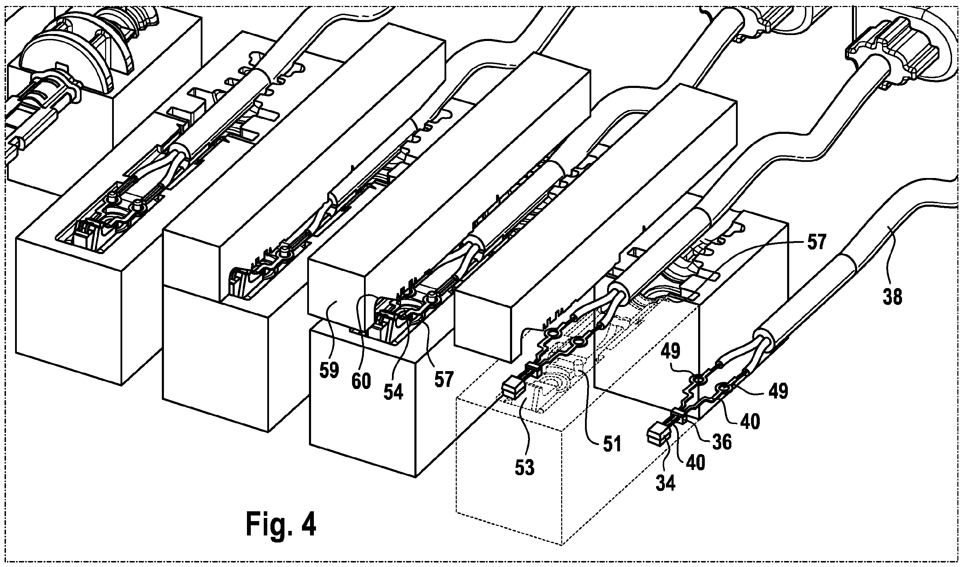

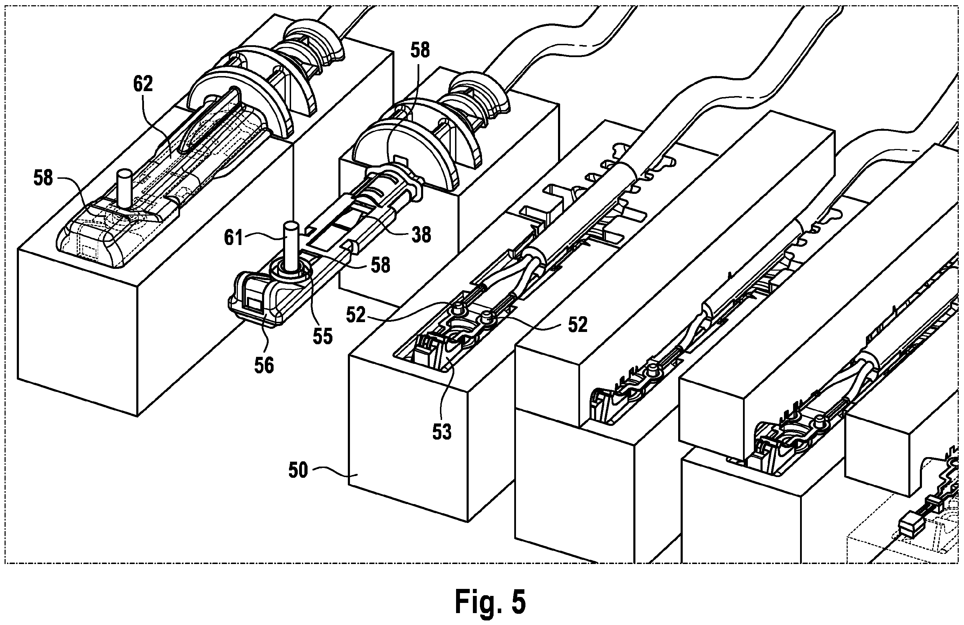

Es wird auf Fig. 3 bis 5 Bezug genommen, die eine schematische Ansicht eines Verfahrensablaufes zum Herstellen eines Teils 42 des Drehzahlsensors 10 der Fig. 2 zeigen.

Dabei ist der Teil 42 des Drehzahlsensors 10 in verschiedenen Fertigungsstufen 43 bis 48 dargestellt, die in den Fig. 3 bis 5 nicht in aufsteigender Reihenfolge hinsichtlich der Durchführung des Herstellungsverfahrens dargestellt sind. Der Übersichtlichkeit halber sind in den Fig. 3 bis 5 gleiche Elemente innerhalb der einzelnen Fertigungsstufen nur einmal mit einem Bezugszeichen versehen.

Das Verfahren beginnt in der ersten Fertigungsstufe 43 damit, dass der Messaufnehmer 34, die Signalaufbereitungsschaltung 36 und das Datenkabel 38 über die Verdrahtungen 40 miteinander verbunden werden. Dabei weisen die Verdrahtungen 40 zwischen der Signalaufbereitungsschaltung 36 und dem Datenkabel 38 Positionierungsöffnungen 49 auf.

Im Rahmen der zweiten Fertigungsstufe 44 wird die Schaltung aus dem so verbundenen Messaufnehmer 34, der Signalaufbereitungsschaltung 36 und dem Datenkabel 38 in einem unteren Gussformteil 50 einer ersten Gussform aufgenommen. Details dazu, wie diese Schaltung in das untere Gussformteil eingelegt wird, und wie das untere Gussformteil 50 aufgebaut ist, soll nachstehend anhand der Explosionsdarstellung im Rahmen der dritten Fertigungsstufe 45 erläutert werden.

Das untere Gussformteil 50 umfasst zwei Aufnahmeöffnungen 51, in denen Positionierelemente in Form von Positionierstiften 52 eingesetzt werden können. Auf diese Positionierstifte 52, werden die oben genannten Positionieröffnungen 49, wie in der zweiten Fertigungsstufe 44 zu sehen, aufgesetzt.

Ferner umfasst das untere Gussformteil 50 einen Biegestempel 53, auf den die Verdrahtung 40 zwischen dem Messaufnehmer 34 und der Auswerteschaltung 36 aufgelegt wird. Über den Biegestempel 53 wird der Messaufnehmer 34 im Rahmen des Herstellungsverfahrens, wie später noch näher erläutert wird, gegenüber der Auswerteschaltung 36 gebogen, so dass der Messaufnehmer 34 parallel zur Encoderscheibe 26 für eine optimale Erfassung des Magnetfeldes 30 abgewinkelt werden kann. Im Rahmen der zweiten Fertigungsstufe 44 ist dieser abgewinkelte Zustand bereits dargestellt. Die Schaltung wird jedoch im unabgewinkelten Zustand des Messaufnehmers 34 in das untere Gussformteil 50 eingelegt.

Das untere Gussformteil 50 weist ferner einen Halteformbereich 54 auf, über den eine später noch zu beschreibende Halteform 55 an einem mit der ersten Gussform zu formenden Zwischengehäuse 56 ausgebildet werden kann. Darauf wird an späterer Stelle näher eingegangen. Um diesen Halteformbereich 54 ist ein Dichtformbereich 57 ausgebildet, mit dem um die Halteform 55 eine Dichtform 58 an dem Zwischengehäuse ausgebildet werden kann. Ein analoger weiterer Dichtformbereich 57 kann am kabelseitgen Ende des unteren Gussformteils 50 ausgebildet sein.

Im nächsten, dritten Fertigungsschritt 44 wird über dem unteren Gussformteil 50 ein zur ersten Gussform gehörendes oberes Gussformteil 59 angeordnet, das in den Fig. 3 bis 5 aufgeschnitten dargestellt ist. Das obere Gussformteil 59 weist analog zum unteren Gussformteil 50 einen Halteformbereich 54 und zwei Dichtformbereiche 57 auf, die jedoch in den Fig. 3 bis 5 der Übersichtlichkeit halber nicht mit einem Bezugszeichen versehen sind. Ferner weist das ober Gussformteil 59 eine Aussparung 60 auf, in der der Biegestempel 53 aufgenommen werden kann.

Dieses obere Gussformteil 59 wird nun im Rahmen der vierten und fünften Fertigungsstufe 46, 47, wie in Fig. 3 gezeigt, gegen das untere Gussformteil 50 bewegt, so dass der Gusshohlraum zwischen den beiden Gussformteilen 50, 59, der unter anderem den Halteformbereich 54 und die Dichtformbereiche 57 sowie einen nicht weiter referenzierten, das Zwischengehäuse 56 formenden Bereich umfasst geschlossen wird. Im Rahmen dieser Schließbewegung werden die auf dem Biegestempel 53 aufgelegten Verdrahtungen 40 abgebogen, so dass der Messaufnehmer 34 in die oben beschriebene Lage gebogen wird, bei der er parallel zum Encoderrad 26 ausgerichtet werden kann.

In den nun geschlossenen Gusshohlraum wird ein das Zwischengehäuse 56 formendes erstes Ummantelungsmaterial eingegossen oder eingespritzt. Nach einem anfänglichen Aushärten dieses ersten Ummantelungsmaterials werden die beiden Gussformteile 50, 59 im Rahmen der sechsten Fertigungsstufe 48 entfernt und in einen der beiden gebildeten Halteformen 55 (oberhalb oder unterhalb des Zwischengehäuses 56) oder in beide Halteformen 55 ein als Halteelement ausgebildeter Haltestift 61 eingesetzt. Dabei kann das Zwischengehäuse 56 weiterhin in einem hinteren Teil 66 des unteren Gussformteils 50 stabil gehalten werden.

Wie im Rahmen der sechsten Fertigungsstufe 48 zu sehen sind noch Teile der oben genannten Schaltung, wie beispielsweise das Kabel 39 am Zwischengehäuse 56 freigelegt. Um diese Bereiche zu schließen, wird auf das noch nicht vollständig ausgehärtete Zwischengehäuse 56 ein Abschlussgehäuse 62 aufgespritzt, das diese freiliegenden Bereiche vollständig verschließt. Dadurch, dass das Abschlussgehäuse 62 in einem unvollständig ausgehärteten Zustand des Zwischengehäuses 56 auf dieses aufgespritzt wird, ist können sich das Abschlussgehäuse und das Zwischengehäuse besser miteinander verbinden.

In der Folge entsteht ein Drehzahlsensor 10, in dem der Messaufnehmer 34 dicht eingeschlossen und so geschützt vor eindringender Feuchtigkeit ist.

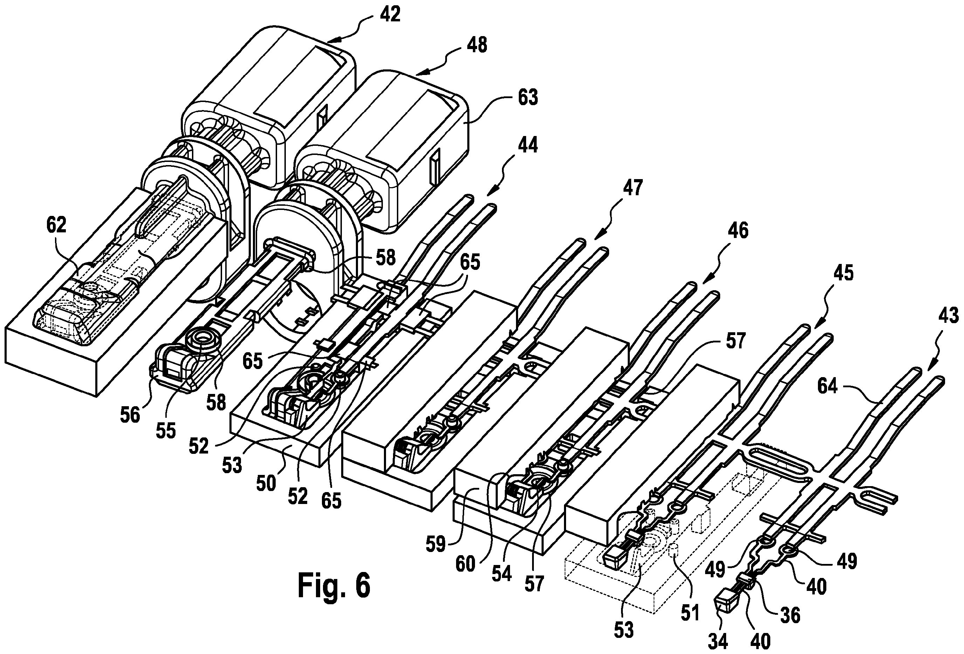

Es wird auf Fig. 6 Bezug genommen, die eine schematische Ansicht eines alternativen Verfahrensablaufes zum Herstellen eines Teils des Drehzahlsensors der Fig. 2 zeigt.

Im Rahmen dieses Verfahrensablaufes wird das Datenkabel 38 nicht direkt sondern über einen Stecker 63 an den Drehzahlsensor 10 angeschlossen. Der Stecker 63 kann dabei zusammen mit dem Zwischengehäuse 56 gegossen werden.

Dabei werden der Messaufnehmer 34 und die Signalaufbereitungsschaltung 36 über die Verdrahtung 40 an einen Leadframe 64 angeschlossen. Der Leadframe 64 kann dabei als Meterware ausgebildet sein, wobei ein einzelner Leadframe-Abschnitt vor Formen des Zwischengehäuses 56 beispielsweise mit einem Stanzelement 65 ausgeschnitten werden kann. Im Übrigen kann die Herstellung in der gleichen Weise erfolgen, wie in den Fig. 3 bis 5.

## Patentansprüche

1. Verfahren zum Herstellen eines Sensors (10), der eingerichtet ist, ein von einer zu messenden Größe (12) abhängiges physikalisches Feld (30) über einen Messaufnehmer (34) zu erfassen und ein elektrisches Ausgangssignal (12) basierend auf dem erfassten physikalischen Feld (30) über ein Datenkabel (38, 64) auszugeben, umfassend:
- Auflegen des Messaufnehmers (34) und des Datenkabels (64) auf eine die Position des Messaufnehmers (34) und des Datenkabels (38, 64) definierenden Form (50, 59),
- Ummanteln des in der Form (50, 59) positionierten Messaufnehmers (34) und Datenkabels (38, 64) mit einem ersten Material (56),
- Entfernen des mit dem ersten Material (56) ummantelten Messaufnehmers (34) und Datenkabels (38, 64) aus der Form (50, 59), und
- Ummanteln des mit dem ersten Material (56) ummantelten und aus der Form (50, 59) entfernten Messaufnehmers (34) und Datenkabels (38, 64) mit einem zweiten Material (62),
**dadurch gekennzeichnet, dass**
die Form (50, 52) ein Umformelement (53, 60) umfasst, an dem der Messaufnehmer (34) vor oder beim Ummanteln mit dem ersten Material (56) umgeformt wird.

2. Verfahren nach Anspruch 1, wobei die Form (50, 59) eine Positionierelement (52) umfasst, mit der der Messaufnehmer (34) positioniert wird.

3. Verfahren nach Anspruch 1 oder 2, wobei das Umformelement (53, 60) ein Biegeelement ist.

4. Verfahren nach einem der vorstehenden Ansprüche, umfassend Formen eines Formschlusselements (55) in dem ersten Material (56) beim Ummanteln des in der Form (50, 59) positionierten Messaufnehmers (34) und Datenkabels (38, 64) mit dem ersten Material (56).

5. Verfahren nach Anspruch 4, umfassend Formen einer Dichtkontur (58) um das Formschlus selement (55) beim Ummanteln des in der Form (50, 59) positionierten Messaufnehmers (34) und Datenkabels (38, 64) mit einem ersten Material (56).

6. Verfahren nach Anspruch 4 oder 5, umfassend Einsetzen eines Halteelementes (61) in das Formschlusselement (55), an dem der mit dem ersten Material (56) ummantelte Messaufnehmer (34) und das Datenkabel (38, 64) nach dem Ummanteln mit dem ersten Material (56) gehalten werden kann.

7. Verfahren nach einem der vorstehenden Ansprüche, wobei der mit dem ersten Material (56) ummantelte und aus der Form entfernte Messaufnehmer (34) und das Datenkabel (38, 64) mit dem zweiten Material (62) in einem unausgehärteten Zustand des ersten Materials (56) ummantelt werden.

8. Verfahren nach einem der vorstehenden Ansprüche, umfassend Ausbilden einer in Richtung des Datenkabels (38, 64) betrachteten um das erste Material (56) umlaufenden Dichtkontur (58) am ersten Material (56) auf einer dem Messaufnehmer (38) gegenüberliegenden Seite des Datenkabels (38, 64).

9. Form zur Verwendung in einem Verfahren nach einem der vorstehenden Ansprüche 1 bis 8, umfassend
- ein erstes Gussformteil (50) und
- ein auf das erste Gussformteil (50) auflegbares zweites Gussformteil (59),
- wobei die beiden Gussformteile (50, 59) im aufeinander aufgelegten Zustand einen Gussholraum ausbilden, in dem wenigstens teilweise das Datenkabel (38), der Messaufnehmer (34) und ein erstes Material (56) aufnehmbar ist, und
- wobei am ersten Gussformteil (50) ein Biegestempel (53) und am zweiten Gussformteil (59) eine Aussparung (60) zur Aufnahme des Biegestempels (53) ausgebildet sind, mittels denen der Messaufnehmer (34) beim Auflegen des zweiten Gussformteils (59) auf das erste Gussformteil (50) umformbar ist.

## Claims

1. Method for producing a sensor (10) which is configured to detect a physical field (30), dependent on a variable (12) to be measured, by means of a measuring sensor (34), and to output an electrical output signal (12) on the basis of the detected physical field (30) via a data cable (38, 64), comprising:
- placing the measuring sensor (34) and the data cable (64) in a mold (50, 59) which defines the position of the measuring sensor (34) and of the data cable (38, 64),
- encapsulating the measuring sensor (34) and data cable (38, 64) positioned in the mold (50, 59) with a first material (56),
- removing the measuring sensor (34) and data cable (38, 64) encapsulated with the first material (56) from the mold (50, 59), and
- encapsulating the measuring sensor (34) and data cable (38, 64) encapsulated with the first material (56) and removed from the mold (50, 59) with a second material (62),
**characterized in that**
the mold (50, 52) comprises a shaping element (53, 60) on which the measuring sensor (34) is shaped before or during the encapsulation with the first material (56).

2. Method according to Claim 1, wherein the mold (50, 59) comprises a positioning element (52) with which the measuring sensor (34) is positioned.

3. Method according to Claim 1 or 2, wherein the shaping element (53, 60) is a bending element.

4. Method according to one of the preceding claims, comprising molding a positively locking element (55) in the first material (56) during the encapsulation of the measuring sensor (34) and data cable (38, 64), positioned in the mold (50, 59), with the first material (56).

5. Method according to Claim 4, comprising molding a sealing contour (58) around the positively locking element (55) during the encapsulation of the measuring sensor (34) and data cable (38, 64), positioned in the mold (50, 59), with a first material (56).

6. Method according to Claim 4 or 5, comprising inserting a securing element (61) into the positively locking element (55), to which securing element (61) the measuring sensor (34), encapsulated with the first material (56), and the data cable (38, 64) can be secured after the encapsulation with the first material (56).

7. Method according to one of the preceding claims, wherein the measuring sensor (34), encapsulated with the first material (56) and removed from the mold, and the data cable (38, 64) are encapsulated with the second material (62) in a non-cured state of the first material (56).

8. Method according to one of the preceding claims, comprising forming a sealing contour (58) which, when viewed in the direction of the data cable (38, 64), runs around the first material (56), on the first material (56) on a side of the data cable (38, 64) lying opposite the measuring sensor (34).

9. Mold for use in a method according to one of the preceding Claims 1 to 8, comprising
- a first mold part (50), and
- a second mold part (59) which can be placed on the first mold part (50),
- wherein the two mold parts (50, 59) form, in the state in which they are placed one on the other, a casting cavity in which the data cable (38), the measuring sensor (34) and a first material (56) can be at least partially accommodated, and
- wherein a bending die (53) is formed on the first mold part (50), and a recess (60) is formed on the second mold part (59), for accommodating the bending die (53), by means of which bending die (53) and recess (60) the measuring sensor (34) can be shaped when the second mold part (59) is placed on the first mold part (50).

## Revendications

1. Procédé de fabrication d'un capteur (10), lequel est conçu pour acquérir, par le biais d'un enregistreur de mesure (34), un champ physique (30) dépendant d'une grandeur à mesurer (12), et pour délivrer, par le biais d'un câble de données (38, 64), un signal de sortie (12) électrique basé sur le champ physique (30) acquis, comprenant :
- dépose de l'enregistreur de mesure (34) et du câble de données (64) sur un moule (50, 59) qui définit la position de l'enregistreur de mesure (34) et du câble de données (38, 64),
- enrobage de l'enregistreur de mesure (34) et du câble de données (38, 64) positionnés dans le moule (50, 59) avec un premier matériau (56),
- enlèvement hors du moule (50, 59) de l'enregistreur de mesure (34) et du câble de données (38, 64) enrobés avec le premier matériau (56), et
- enrobage avec un deuxième matériau (62) de l'enregistreur de mesure (34) et du câble de données (38, 64) enrobés avec le premier matériau (56) et retirés du moule (50, 59),
**caractérisé en ce que**
le moule (50, 52) comprend un élément de façonnage (53, 60) contre lequel l'enregistreur de mesure (34) est façonné avant ou au cours de l'enrobage avec le premier matériau (56).

2. Procédé selon la revendication 1, le moule (50, 59) comprenant un élément de positionnement (52) à l'aide duquel l'enregistreur de mesure (34) est positionné.

3. Procédé selon la revendication 1 ou 2, l'élément de façonnage (53, 60) étant un élément de cintrage.

4. Procédé selon l'une des revendications précédentes, comprenant le formage d'un élément de fermeture de moule (55) dans le premier matériau (56) lors de l'enrobage avec le premier matériau (56) de l'enregistreur de mesure (34) et du câble de données (38, 64) positionnés dans le moule (50, 59).

5. Procédé selon la revendication 4, comprenant le formage d'un contour d'étanchéité (58) autour de l'élément de fermeture de moule (55) lors de l'enrobage avec un premier matériau (56) de l'enregistreur de mesure (34) et du câble de données (38, 64) positionnés dans le moule (50, 59).

6. Procédé selon la revendication 4 ou 5, comprenant l'insertion d'un élément de maintien (61) dans l'élément de fermeture de moule (55), auquel l'enregistreur de mesure (34) et du câble de données (38, 64) enrobés avec le premier matériau (56) peuvent être maintenus après l'enrobage avec le premier matériau (56).

7. Procédé selon l'une des revendications précédentes, l'enregistreur de mesure (34) et le câble de données (38, 64), enrobés avec le premier matériau (56) et retirés hors du moule, étant enrobés avec le deuxième matériau (62) dans un état non durci du premier matériau (56).

8. Procédé selon l'une des revendications précédentes, comprenant la formation d'un contour d'étanchéité (58) sur le premier matériau (56), périphérique autour du premier matériau (56) lorsqu'il est observé dans la direction du câble de données (38, 64), sur un côté du câble de données (38, 64) à l'opposé de l'enregistreur de mesure (38).

9. Moule destiné à être utilisé dans un procédé selon l'une des revendications précédentes 1 à 8, comprenant
- une première partie de moule (50) et
- une deuxième partie de moule (59) qui peut être déposée sur la première partie de moule (50),
- les deux parties de moule (50, 59) formant, dans la situation déposées l'une sur l'autre, un espace creux de moulage dans lequel peut être accueilli au moins partiellement le câble de données (38), l'enregistreur de mesure (34) et un premier matériau (56), et
- un poinçon de cintrage (53) étant formé sur la première partie de moule (50) et une cavité (60) destinée à accueillir le poinçon de cintrage (53) étant formée sur la deuxième partie de moule (59), au moyen desquels l'enregistreur de mesure (34) peut être façonné lors de la dépose de la deuxième partie de moule (59) sur la première partie de moule (50).
